# EUROPÄISCHE PATENTANMELDUNG

(11) **EP 4 667 846 A1**
(43) Veröffentlichungstag der Anmeldung: **24.12.2025**
(21) Anmeldenummer: 25182291.2
(22) Anmeldetag: 12.06.2025
(51) Int. Cl.: F24S 25/16, F24S 25/33, F24S 25/65

(54) **MONTAGESYSTEM ZUR MONTAGE VON PHOTOVOLTAIKMODULEN ODER SONNENKOLLEKTOREN AUF FLACHDÄCHERN ODER FREIFLÄCHEN**

(30) Priorität: 17.06.2024 CH 6542024
(71) Anmelder: Soltop Energie AG, 8353 Elgg (CH)
(72) Erfinder: Böhringer, Jürgen, 8353 Elgg (CH); Bründler, Fabian, 8353 Elgg (CH); Frei, Silvio, 8353 Elgg (CH); Cabarrubia, Leandro, 8353 Elgg (CH)
(74) Vertreter: Gachnang AG Patentanwälte

(57) **Zusammenfassung**

Die Erfindung betrifft ein Montagesystem (1) zur Montage von Photovoltaikmodulen oder Sonnenkollektoren auf Flachdächern oder Freiflächen. Das Montagesystem (1) weist mindestens eine Montageeinheit (3) mit zwei Auflagevorrichtungen (4a, 4b) auf, wobei die zwei Auflagevorrichtungen (4a, 4b) je zwei Stützen (5a, 5b) und je einen Träger (6) aufweisen. Die Stützen (5a, 5b) weisen je eine Bodenfläche auf und je einen von der Bodenfläche beabstandeten oberen Endbereich mit einem Stützenverbindungselement. Die stirnseitigen Endbereiche der Träger (6) weisen je ein Trägerverbindungselement auf. Die Träger (6) sind durch ein Verbinden der Trägerverbindungselemente mit den Stützenverbindungselementen, mit den Stützen (5a, 5b) verbindbar, wobei die Stützenverbindungselemente und die Trägerverbindungselemente Verbindungselemente von Schnappverbindungen sind.

## Beschreibung

Die Erfindung betrifft ein Montagesystem und ein Montageverfahren zur Montage von Photovoltaikmodulen oder Sonnenkollektoren auf Flachdächern oder Freiflächen und eine Photovoltaikmodul- oder Sonnenkollektoranordnung mit einem solchen Montagesystem.

Photovoltaikmodule wandeln Sonnenstrahlung in elektrische Energie um. Sonnenkollektoren wandeln Sonnenstrahlung in thermische Energie um. Hybridkollektoren wandeln Sonnenstrahlung sowohl in elektrische als auch in thermische Energie um und können als ein Modul oder Kollektor angesehen werden, das bzw. der sowohl ein Photovoltaikmodul als auch ein Sonnenkollektor umfasst. Vorliegend wird ein Hybridkollektor als eine Ausführungsform eines Photovoltaikmoduls angesehen. Was vorliegend im Zusammenhang mit einem Photovoltaikmodul bzw. mit Photovoltaikmodulen offenbart ist gilt gleichermassen auch im Zusammenhang mit einem Hybridkollektor bzw. Hybridkollektoren. Mit anderen Worten ausgedrückt ist vorliegend mit Photovoltaikmodul bzw. Photovoltaikmodulen auch ein Hybridkollektor bzw. Hybridkollektoren gemeint.

Sowohl Photovoltaikmodule als auch Sonnenkollektoren sind typischerweise rechteckige, plattenförmige Elemente.

Für eine effiziente Umwandlung der Sonnenstrahlung in elektrische oder auch thermische Energie sind Photovoltaikmodule und Sonnenkollektoren auf die Sonne auszurichten. Um Windlasten und Schneelasten standzuhalten sind Photovoltaikmodule und Sonnenkollektoren am Flachdach oder an der Freifläche zu befestigen und auf dem Flachdach oder der Freifläche abzustützen.

Für die Ausrichtung, Befestigung und Abstützung von Photovoltaikmodulen oder Sonnenkollektoren wird typischerweise ein Montagesystem verwendet. Das Montagesystem wird auf dem Flachdach oder der Freifläche aufgestellt und am Flachdach oder an der Freifläche befestigt. Die Photovoltaikmodule oder Sonnenkollektoren werden dann ausgerichtet am Montagesystem befestigt und durch das Montagesystem auf dem Flachdach oder der Freifläche abgestützt.

Ein wesentlicher Aspekt eines solchen Montagesystems betrifft das effiziente Montieren bzw. Aufstellen des Montagesystems, und das effiziente Befestigen von Photovoltaikmodulen oder Sonnenkollektoren am Montagesystem.

Es ist somit eine Aufgabe der Erfindung ein Montagesystem und ein Montageverfahren zur Montage von Photovoltaikmodulen oder Sonnenkollektoren auf Flachdächern oder Freiflächen bereitzustellen, die ein effizientes Montieren einer Photovoltaikmodulanordnung oder einer Sonnenkollektoranordnung ermöglichen.

Die Aufgabe wird gelöst durch ein Montagesystem gemäss den Merkmalen des Anspruchs 1 und durch ein Montageverfahren gemäss den Merkmalen des Anspruchs 15. Die abhängigen Ansprüche betreffen bevorzugte Ausführungsformen des Montagesystems.

Unter Flachdächern werden vorliegend Dächer verstanden, die keine oder eine nur sehr geringe Dachneigung, beispielsweise eine Dachneigung, also einen Winkel zur Horizontalen, von bis zu 10° aufweisen.

Unter Schnappverbindungen werden vorliegend formschlüssige Verbindungen verstanden, bei denen ein vorstehendes Element des einen Verbindungspartners bei der Montage kurzfristig ausgelenkt wird und in einen Freiraum des anderen Verbindungspartners einrastet, sodass die Verbindungpartner formschlüssig zusammengehalten sind.

Die Erfindung betrifft ein Montagesystem zur Montage von Photovoltaikmodulen oder Sonnenkollektoren auf Flachdächern oder Freiflächen.

Das Montagesystem weist mindestens eine Montageeinheit mit zwei Auflagevorrichtungen auf, wobei die zwei Auflagevorrichtungen je zwei Stützen und je einen Träger aufweisen.

Bei jeder der zwei Auflagevorrichtungen weisen die Stützen je eine Bodenfläche auf, weisen die Stützen je einen von der Bodenfläche beabstandeten oberen Endbereich mit einem Stützenverbindungselement auf, weisen die stirnseitigen Endbereiche des Trägers je ein Trägerverbindungselement auf, ist der Träger, durch ein Verbinden der Trägerverbindungselemente mit den Stützenverbindungselementen, mit den Stützen verbindbar, und sind die Stützenverbindungselemente und die Trägerverbindungselemente Verbindungselemente von Schnappverbindungen.

Dies ist so ausgeführt, dass bei der Montage bei jeder der zwei Auflagevorrichtungen der Träger über die Schnappverbindungen mit den oberen Endbereichen der auf den Bodenflächen aufgestellten Stützen verbindbar ist, und ein Photovoltaikmodul oder ein Sonnenkollektor auf die mit den Stützen verbundenen Träger der zwei Auflagevorrichtungen auflegbar und an diesen Trägern befestigbar ist.

Die Photovoltaikmodule oder die Sonnenkollektoren können rechteckig sein mit zwei Längsseiten und zwei Schmalseiten.

Die Montageeinheit ist als die Einheit des Montagesystems anzusehen, welche mindestens nötig ist, um ein Photovoltaikmodul oder einen Sonnenkollektor auf einem Flachdach oder einer Freifläche zu montieren.

Die Montageeinheit umfasst die zwei genannten Auflagevorrichtungen. Jede Auflagevorrichtung ist auf einem Flachdach oder einer Freifläche aufstellbar, für sich oder in Kombination mit mindestens einer weiteren Montageeinheit.

Zum Montieren einer Auflagevorrichtung sind in einem ersten Montageschritt die zwei Stützen auf ihre Bodenflächen aufzustellen, sodass ihre oberen Endbereiche mit den Stützenverbindungselementen frei zugänglich sind. Die zwei Stützen können je so ausgestaltet sein, dass sie vertikal auf dem Flachdach oder der Freifläche stehen, wenn sie auf ihrer Bodenfläche aufgestellt sind.

In einem weiteren Montageschritt ist der Träger mit den Stützen zu verbinden.

Dazu kann beispielsweise ein Trägerverbindungselement des Trägers mit einem Stützenverbindungselement einer der zwei Stützen zusammengedrückt werden, bis das Trägerverbindungselement und das Stützenverbindungselement ineinander einschnappen und so der Träger mit der Stütze formschlüssig verbunden ist. Das andere Trägerverbindungselement ist dann mit dem Stützenverbindungselement der anderen Stütze zusammenzudrücken, bis das andere Trägerverbindungselement und das Stützenverbindungselement der anderen Stütze ineinander einschnappen und so der Träger auch mit der anderen Stütze formschlüssig verbunden ist.

Stehen die zwei Stützen vertikal auf dem Flachdach oder der Freifläche kann das Zusammendrücken der Trägerverbindungselemente und der Stützenverbindungselemente durch die Schwerkraft unterstützt und somit erleichtert erfolgen.

Stehen die zwei Stützen vertikal auf dem Flachdach oder der Freifläche und haben die Stützenverbindungselemente einen Abstand zueinander der dem Abstand der Trägerverbindungselemente entspricht können die Trägerverbindungselemente und die Stützenverbindungselemente durch eine einzige Kraftausübung auf den Träger zusammengedrückt werden, sodass nach einer einzigen Kraftausübung der Träger mit beiden Stützen formschlüssig verbunden ist.

Der Träger verbindet die zwei Stützen und wird von diesen so gestützt, dass zwischen den zwei Stützen ein Photovoltaikmodul oder ein Sonnenkollektor auf den Träger auflegbar und vom Träger stützbar ist.

In analoger Weise kann die andere der zwei Auflagevorrichtungen einer Montageeinheit montiert werden.

Die zwei montierten Auflagevorrichtungen können zueinander entsprechend den Massen eines zu montierenden Photovoltaikmoduls oder Sonnenkollektors auf dem Flachdach oder der Freifläche positioniert werden.

Vorteilhafterweise sind die zwei Auflagevorrichtungen so zueinander positioniert, dass die Träger parallel zueinander ausgerichtet sind. Das Photovoltaikmodul oder der Sonnenkollektor ist dann mit einer seiner Seiten quer zu den Trägern auf diese aufzulegen, wobei die Träger einen Abstand zueinander aufweisen, der kleiner ist als die Seitenlänge der quer zu den Trägern verlaufenden Seite. Dadurch wird erreicht, dass das auf die Träger aufgelegte Photovoltaikmodul oder der auf die Träger aufgelegte Sonnenkollektor zwischen seinen Seiten gestützt und somit auch zwischen seinen Seiten belastbar ist.

Ist das Photovoltaikmodul oder der Sonnenkollektor rechteckig, mit zwei Längsseiten und zwei Schmalseiten, ist dieses bzw. dieser vorzugsweise mit seiner Längsseite quer zu den Trägern auf die Träger aufzulegen. Dadurch wird erreicht, dass das auf die Träger aufgelegte Photovoltaikmodul oder der auf die Träger aufgelegte Sonnenkollektor zwischen seinen Schmalseiten gestützt und somit auch zwischen seinen Schmalseiten belastbar ist.

Die Bereitstellung der Schnappverbindungen zum formschlüssigen Verbinden der Endbereiche des Trägers mit den Endbereichen der Stützen ermöglicht ein werkzeugloses und effizientes montieren einzelner Auflagevorrichtungen, die flexibel zueinander auf einem Flachdach oder auf einer Freifläche positionierbar sind.

Dadurch, dass eine Montageeinheit zwei solche einzelne Auflagevorrichtungen aufweist, kann das Montagesystem einfach auf unterschiedliche Grössen der Photovoltaikmodule oder der Sonnenkollektoren und an vorgegebene Platzverhältnisse angepasst werden.

Gemäss einer Ausführungsform sind bei jeder der zwei Auflagevorrichtungen die zwei Stützen gleichlang. Sind die zwei Stützen jeder Auflagevorrichtung gleichlang, dann sind die mit den gleichlangen Stützen verbundenen Träger im Wesentlichen parallel zum Flachdach oder zur Freifläche ausgerichtet.

Gemäss einer Ausführungsform weisen die gleichlangen Stützen jeder Auflagevorrichtung je ein weiteres Stützenverbindungselement im von der Bodenfläche beabstandeten oberen Endbereich auf. Für jede der gleichlangen Stützen können das Stützenverbindungselement und das weitere Stützenverbindungselement in einer zur Bodenfläche parallelen Ebene nebeneinander angeordnet sein.

Das weitere Stützenverbindungselement bei den gleichlangen Stützen ermöglicht das Verbinden von je zwei Trägern mit einer der gleichlangen Stützen, sodass jede gleichlange Stütze Teil von zwei benachbarten Montageeinheiten sein kann.

Gemäss einer Ausführungsform weist für jede Auflagevorrichtung mindestens eine der gleichlangen Stützen im Bereich der Bodenfläche einen nach unten offenen Kabeldurchgangsraum auf, sodass die mindestens eine der gleichlangen Stützen so auf Kabel stellbar ist, dass die Kabel in den Kabeldurchgangsraum gelangen.

Photovoltaikmodule werden typischerweise mit Kabel, die auf dem Flachdach oder der Freifläche am Boden verlegt sind, elektrisch angeschlossen. Sonnenkollektoren werden typischerweise mit Leitungen, die auf dem Flachdach oder der Freifläche verlegt sind an einen Wärmeträgermediumkreislauf angeschlossen.

Der nach unten offene Kabeldurchgangsraum ermöglicht, dass die mindestens eine der gleichlangen Stützen stabil auf verlegte Kabel oder Leitungen stellbar ist und dass die Kabel oder Leitungen durch den Kabeldurchgangsraum der mindestens einen der gleichlangen auf die Kabel gestellten Stützen verlaufen. Mit anderen Worten ausgedrückt, müssen keine Enden von solchen Kabeln oder Leitungen durch die mindestens eine der gleichlangen Stützen hindurchgefädelt werden. Dies ermöglicht ein flexibles und effizientes Montieren des Montagesystems.

Gemäss einer Ausführungsform ist bei jeder der zwei Auflagevorrichtungen eine der zwei Stützen die längere Stütze und die andere die kürzere Stütze, insbesondere sind die längeren Stützen gleichlang und die kürzeren Stützen gleichlang.

Bei einer Montageeinheit, bei der die zwei Auflagevorrichtungen je eine kürzere und je eine längere Stütze aufweisen, sind die mit den längeren und kürzeren Stützen verbundenen Träger zum Flachdach oder zur Freifläche hin geneigt ausgerichtet. Dies ermöglicht die Montage eines Photovoltaikmoduls oder eines Sonnenkollektors in geneigter Ausrichtung. Beispielsweise können die längeren und kürzeren Stützen Längen aufweisen, sodass die mit den längeren und kürzeren Stützen verbundenen Träger mit einem Winkel W zur Horizontalen von 10° ≤ W ≤ 20° ausgerichtet sind. Dadurch lassen sich Photovoltaikmodule oder Sonnenkollektoren unter einem Winkel W zur Horizontalen von 10° ≤ W ≤ 20° auf einem Flachdach oder einer Freifläche montieren und dadurch auf die Sonne ausrichten.

Gemäss einer Ausführungsform weisen die längeren Stützen je ein weiteres Stützenverbindungselement im von der Bodenfläche beabstandeten oberen Endbereich auf, und weisen die kürzeren Stützen je ein weiteres Stützenverbindungselement oder zwei weitere Stützenverbindungselemente im von der Bodenfläche beabstandeten oberen Endbereich auf. Für jede längere Stütze können das Stützenverbindungselement und das weitere Stützenverbindungselement in einer zur Bodenfläche parallelen Ebene nebeneinander angeordnet sein.

Das weitere Stützenverbindungselement bei der längeren Stütze ermöglicht das Verbinden von zwei Trägern mit der längeren Stütze, sodass die längere Stütze Teil von zwei benachbarten Montageeinheiten sein kann. Das weitere Stützenverbindungselement bzw. die weiteren Stützenverbindungselemente bei der kürzeren Stütze ermöglicht bzw. ermöglichen das Verbinden von zwei Trägern mit der kürzeren Stütze, sodass die kürzere Stütze Teil von zwei benachbarten Montageeinheiten sein kann. Für jede kürzere Stütze können die weiteren Stützenverbindungselemente in Längsrichtung des Fusses nebeneinander angeordnet sein. Für jede kürzere Stütze kann eines der weiteren Stützenverbindungselemente zwischen dem anderen weiteren Stützenverbindungselement und dem Stützenverbindungselement angeordnet sein. Die seitlich angeordneten Stützenverbindungselemente können verwendet werden, wenn zwei Träger von benachbarten Montageeinheiten verbunden werden.

Ein mittig angeordnetes Stützenverbindungselement kann verwendet werden, wenn nur ein Träger verbunden wird.

Gemäss einer Ausführungsform weisen die längeren Stützen je im Bereich der Bodenfläche einen nach unten offenen Kabeldurchgangsraum auf, sodass die längeren Stützen so auf Kabel stellbar sind, dass die Kabel in den Kabeldurchgangsraum gelangen.

Der nach unten offene Kabeldurchgangsraum ermöglicht, dass die längeren Stützen stabil auf verlegte Kabel oder Leitungen stellbar sind und dass die Kabel oder Leitungen durch die Kabeldurchgangsräume der auf sie gestellten längeren Stützen verlaufen. Mit anderen Worten ausgedrückt, müssen keine Enden von solchen Kabeln oder Leitungen durch die längeren Stützen hindurchgefädelt werden. Dies ermöglicht ein flexibles und effizientes Montieren des Montagesystems.

Gemäss einer Ausführungsform weisen die Stützen je einen Fuss mit der Bodenfläche als Teil davon und je ein am Fuss anschliessendes Stützenelement auf.

Der Fuss jeder Stütze kann so ausgestaltet sein, dass er den Querschnitt des jeweiligen Stützenelements mindestens teilweise so überragt, dass die jeweilige Stütze selbststehend auf ihre Bodenfläche aufstellbar ist. Dadurch ist jede Stütze einzeln stabil auf einem Flachdach oder einer Freifläche aufstellbar. Dies ermöglicht eine einfache und effiziente Montage des Montagesystems.

Gemäss einer Ausführungsform sind bei jeder Stütze der Fuss und das Stützenelement über eine Stützenschnappverbindung miteinander verbindbar und voneinander lösbar.

Dadurch wird ermöglicht, dass alternativ unterschiedliche, beispielsweise unterschiedlich lange, Stützenelemente mit einem Fuss verbindbar sind. Dadurch kann jede Stütze, an vorgegebene Verhältnisse angepasst, einfach und werkzeugfrei montiert werden.

Gemäss einer Ausführungsform ist bei jeder Stütze der Fuss ein Abschnitt eines ersten Strangpressprofils, ist das Stützenelement ein Abschnitt eines zweiten Strangpressprofils, und erstreckt sich die Profilquerschnittsebene des Fusses orthogonal zur Profilquerschnittsebene des Stützenelements.

Dadurch sind die rohrartigen Strangpressprofilbereiche des Fusses orthogonal zu den rohrartigen Strangpressprofilbereichen des Stützenelements ausgerichtet. Dadurch sind Funktionalitäten, die sich aufgrund der Ausrichtung der rohrartigen Strangpressprofilbereiche ergeben in zwei zueinander orthogonalen Richtungen bereitstellbar.

Gemäss einer Ausführungsform sind die Stützenverbindungselemente je stabförmig ausgebildet und weisen die Trägerverbindungselemente je einen Aufnahmeraum zur Aufnahme eines stabförmig ausgebildeten Stützenverbindungselements, und eine aus einer Ruhestellung elastisch auslenkbare Sperre, die in Ruhestellung einen Durchgang zum Aufnahmeraum für das stabförmig ausgebildete Stützenverbindungselement sperrt, auf, sodass beim Drücken der Sperre gegen das stabförmig ausgebildete Stützenverbindungselement, die Sperre elastisch auslenkt und dadurch den Durchgang für das stabförmig ausgebildete Stützenverbindungselement freigibt und diesen nach Aufnahme des stabförmig ausgebildeten Stützenverbindungselements im Aufnahmeraum für das stabförmig ausgebildete Stützenverbindungselement sperrt.

Dadurch sind die stirnseitigen Endbereiche des Trägers an den Endbereichen der Stützen einschnappbar und kann das Stützenverbindungselement Lasten aufnehmen und über die Stützen ableiten.

Das Stützenverbindungselement kann einen runden Querschnitt aufweisen.

Die Stützen können je einen rohrartigen Abschnitt mit einem Hohlraum und Seitenwänden aufweisen, wobei sich das Stützenverbindungselement von einer Seitenwand zur gegenüberliegenden Seitenwand durch den Hohlraum hindurch erstreckt und an den Seitenwänden befestigt ist.

Die Stützenverbindungselemente und die Trägerverbindungselemente können so ausgebildet sein, dass wenn der Träger über die Schnappverbindung mit dem oberen Endbereich der Stütze verbunden ist, der Träger um eine Schwenkachse, die im Bereich der Verbindungselemente angeordnet ist, schwenkbar ist, insbesondere um mindestens 90° um die Schwenkachse schwenkbar ist.

Sind die Stützenverbindungselemente stabförmig ausgebildet, und weisen insbesondere einen runden Querschnitt auf, kann das Stützenverbindungselement die Schwenkachse umfassen, sodass wenn der Träger über die Schnappverbindung mit dem oberen Endbereich der Stütze verbunden ist, der Träger um das Stützenverbindungselement schwenkbar ist.

Die Stützen können je einen rohrartigen Abschnitt der u-profilförmig ist aufweisen. Der rohrartige u-profilförmige Abschnitt weist zwei beabstandete und im Wesentlichen parallel zueinander ausgerichtete Schenkel auf, wobei sich das Stützenverbindungselement vom einen der zwei Schenkel zum anderen der zwei Schenkel durch den dazwischenliegenden Hohlraum hindurch erstreckt und an den Schenkeln befestigt ist.

Das Stützenverbindungselement kann so am rohrartigen u-profilförmigen Abschnitt angeordnet sein und der rohrartige u-profilförmige Abschnitt kann so geformt sein, dass wenn der Träger über die Schnappverbindung mit dem oberen Endbereich der Stütze verbunden ist, Teile des Trägers in den Hohlraum ragen oder in den Hohlraum schwenkbar sind.

Ist der Träger, wenn er über die Schnappverbindung mit dem oberen Endbereich der Stütze verbunden ist, um eine Schwenkachse schwenkbar, kann das Montagesystem an Unebenheiten des Flachdachs oder der Freifläche angepasst werden.

Die Sperre und der Aufnahmeraum können so ausgestaltet sein, dass, wenn der Träger über die Schnappverbindung mit dem oberen Endbereich der Stütze verbunden ist, das Stützenverbindungselement vom Trägerverbindungselement allseitig vollständig umgriffen ist.

Dadurch ist eine sichere Verbindung des Trägers mit den Stützen erzielbar.

Gemäss einer Ausführungsform umfasst die Sperre ein Federelement, insbesondere ein Blattfederelement oder Spiralfederelement, und einen Schieber, und ist der Schieber durch das Federelement elastisch auslenkbar in der Ruhestellung gehalten, wobei insbesondere der Schieber und das Blattfederelement einstückig ausgebildet sind.

Dadurch sind die stirnseitigen Endbereiche des Trägers bzw. die Schieber des Trägers gegen die Stützenverbindungselemente drückbar und ist so eine formschlüssige Verbindung vom Träger mit den Stützen herstellbar.

Gemäss einer Ausführungsform weist jede der zwei Auflagevorrichtungen zwei Befestigungselemente auf und ist jeder Träger der zwei Auflagevorrichtungen je ein Strangpressprofil mit einer parallel zur Längsachse des Strangpressprofils verlaufenden Nut zur Aufnahme eines Nutsteins, sodass das Photovoltaikmodul oder der Sonnenkollektor mit den zwei Befestigungselementen, die je mittels eines Nutsteins am jeweiligen Träger festklemmbar sind, am jeweiligen Träger befestigbar ist.

Dadurch können alternativ Photovoltaikmodule oder Sonnenkollektoren mit unterschiedlichen Grössen einfach an den Trägern befestigt werden. Auch die Position eines Photovoltaikmoduls oder Sonnenkollektors am Träger ist so einfach einstellbar.

Gemäss einer Ausführungsform weist das Montagesystem mindestens eine Bodenschiene auf.

Die mindestens eine Bodenschiene weist ein Bodenschienenverbindungselement auf, wobei bei jeder der zwei Auflagevorrichtungen die Stützen je einen unteren Endbereich, der die Bodenfläche umfasst, aufweisen, und mindestens eine Stütze ein Stützenbodenverbindungselement im unteren Endbereich aufweist, und die Stützenbodenverbindungselemente und das Bodenschienenverbindungselement Verbindungselemente von Bodenschnappverbindungen sind, sodass bei der Montage der mindestens einen Montageeinheit bei jeder der zwei Auflagevorrichtungen die mindestens eine Stütze über eine Bodenschnappverbindung mit der mindestens einen Bodenschiene verbindbar ist, und der Träger, der mit der mindestens einen Stütze, die mit der mindestens einen Bodenschiene verbunden ist, über eine der Schnappverbindungen verbunden ist, quer zur mindestens einen Bodenschiene verläuft.

Die mindestens eine Bodenschiene dient als Befestigungselement zum Befestigen/Halten der Auflagevorrichtungen am Flachdach oder an der Freifläche. Dazu wird die mindestens eine Bodenschiene typischerweise auf eine auf dem Flachdach oder der Freifläche angeordnete Matte aufgelegt und in Bereichen zwischen und neben den mit der mindestens einen Bodenschiene verbundenen Stützen beispielsweise mit Kies oder Steinplatten beschwert.

Die mindestens eine Bodenschiene kann vorstehende Kanten aufweisen, die so an der mindestens einen Bodenschiene ausgebildet sind, dass sie in die Oberfläche, auf der die mindestens eine Bodenschiene aufgelegt ist, gedrückt werden. Dadurch wird die Reibung zwischen der mindestens einen Bodenschiene und der Oberfläche erhöht und ein Verschieben der mindestens einen Bodenschiene durch auftretende Lasten erschwert.

Das Montagesystem kann weitere Bodenschienen oder Bodenschienenabschnitte und jede Stütze der zwei Auflagevorrichtungen kann ein Stützenbodenverbindungselement im unteren Endbereich aufweisen, sodass bei der Montage der mindestens einen Montageeinheit bei jeder der zwei Auflagevorrichtungen jede Stütze über eine Bodenschnappverbindung mit einer Bodenschiene oder einem Bodenschienenabschnitt verbindbar ist.

Das Stützenbodenverbindungselement kann einen Haken und einen Vorsprung aufweisen. Das Bodenschienenverbindungselement der mindestens einen Bodenschiene kann eine Hakenaufnahme, einen Aufnahmeraum für den Vorsprung und ein beim Aufnahmeraum angeordnetes elastisch auslenkbares Schnappelement aufweisen. Der Haken und der Vorsprung können einander gegenüberliegend an der Stütze angeordnet sein. Die Hakenaufnahme und der Aufnahmeraum für den Vorsprung können einander gegenüberliegend an der mindestens einen Bodenschiene angeordnet sein. Der Haken, der Vorsprung, die Hakenaufnahme, der Aufnahmeraum und das Schnappelement können so geformt und aneinander angepasst sein, dass zur Verbindung der Stütze mit der mindestens einen Bodenschiene, der Haken in der Hakenaufnahme einhängbar ist, und mit eingehängtem Haken der Vorsprung gegen das Schnappelement so drückbar ist, dass dieses elastisch auslenkt und wenn der Vorsprung im Aufnahmeraum zu liegen kommt elastisch zurückschwenkt und hinter dem Vorsprung einrastet. Die Stütze ist dadurch in der mindestens einen Bodenschiene festgeklemmt und fest mit der mindestens einen Bodenschiene verbunden.

Die mindestens eine Bodenschiene kann aus einem Blech geformt sein. Die Hakenaufnahme kann im Bereich der einen Längskante des Blechs durch mehrfaches Umbiegen dieses Bereichs um parallel zur Blechlängsrichtung verlaufende Biegekanten geformt sein. Der Aufnahmeraum kann im Bereich der anderen Längskante des Blechs durch mehrfaches Umbiegen dieses Bereichs um parallel zur Blechlängsrichtung verlaufende Biegekanten geformt sein. Die Hakenaufnahme und der Aufnahmeraum können in Bezug auf eine sich mittig zwischen den Längskanten in Blechlängsrichtung und orthogonal zur Blechebene erstreckenden Spiegelebene spiegelsymmetrisch sein.

Dadurch sind Stützen mit Stützenbodenverbindungselementen schnell, einfach und werkzeuglos mit Bodenschienen verbindbar.

Dadurch dass sich die über die Stützen mit der mindestens einen Bodenschiene verbundenen Träger quer zur mindestens einen Bodenschiene erstrecken, können die Träger flexibel entlang dieser Bodenschiene so positioniert werden, dass sie ein aufgelegtes Photovoltaikmodul oder einen aufgelegten Sonnenkollektor an den vorgesehenen Stellen zwischen zwei Rändern stützen. Die Positionierung kann dadurch auch einfach auf Photovoltaikmodule oder Sonnenkollektoren mit unterschiedlichen Massen angepasst werden.

Die Erfindung betrifft auch eine Photovoltaikmodul- oder Sonnenkollektoranordnung mit einem solchen Montagesystem, wobei Photovoltaikmodule oder Sonnenkollektoren jeweils an zwei Trägern jeder Montageeinheit befestigt sind.

Gemäss einer Ausführungsform sind die Befestigungselemente Klemmen und die Photovoltaikmodule oder Sonnenkollektoren liegen jeweils auf den Trägern einer Montageeinheit, insbesondere mit ihrer Längsrichtung quer zu den Trägerlängsrichtungen, auf und sind an jedem Träger mit zwei Klemmen, insbesondere an ihren Längsseiten, festgeklemmt.

Die Erfindung betrifft auch die Verwendung eines solchen Montagesystems zur Montage einer Photovoltaikmodul- oder Sonnenkollektoranordnung.

Die Erfindung betrifft auch ein Montageverfahren zur Montage eines Photovoltaikmoduls oder eines Sonnenkollektors auf einem Flachdach oder auf einer Freifläche, mit den Schritten
Bereitstellen eines solchen Montagesystems;
Für jede der zwei Auflagevorrichtungen Aufstellen der Stützen auf dem Flachdach oder der Freifläche; und
Für jede der zwei Auflagevorrichtungen Verbinden des Trägers über die Schnappverbindungen mit den oberen Endbereichen der Stützen;
Auflegen eines Photovoltaikmoduls oder eines Sonnenkollektors auf die mit den Stützen verbundenen Träger der zwei Auflagevorrichtungen; und
Befestigen des Photovoltaikmoduls oder Sonnenkollektors an den Trägern.

Das Montageverfahren kann folgenden Schritt aufweisen:
Für jede der zwei Auflagevorrichtungen Verbinden der Stützen über Bodenschnappverbindungen mit einer auf dem Flachdach oder der Freifläche aufgelegten Bodenschiene.

Das erfindungsgemässe Montagesystem, die erfindungsgemässe Photovoltaikmodul- oder Sonnenkollektoranordnung und das erfindungsgemässe Montageverfahren sind im Folgenden rein beispielhaft anhand konkreter in den Figuren dargestellter Ausführungsformen näher beschrieben:
- Figur 1: zeigt eine Übersichtsdarstellung eines Montagesystems;
- Figur 2: zeigt eine Übersichtsdarstellung einer Photovoltaikmodul- oder Sonnenkollektoranordnung mit dem Montagesystem;
- Figur 3: zeigt eine Übersichtsdarstellung einer längeren Stütze des Montagesystems;
- Figur 4: zeigt eine Seitenansicht, eine Schnittdarstellung und eine vergrösserte Ansicht einer Stützenschnappverbindung der Stütze von Figur 3;
- Figur 5: zeigt eine Übersichtsdarstellung einer kürzeren Stütze des Montagesystems;
- Figur 6: zeigt eine Seitenansicht, eine Draufsicht und eine Schnittdarstellung der Stütze von Figur 5;
- Figur 7: zeigt einen Träger des Montagesystems;
- Figur 8: zeigt eine Seitenansicht und eine vergrösserte Ansicht eines Trägerverbindungselements des Trägers aus Figur 7;

- Figur 9: zeigt eine Seitenansicht des Montagesystems und eine vergrösserte Ansicht einer Schnappverbindung des Montagesystems;
- Figur 10: zeigt eine Bodenschnappverbindung; und
- Figur 11: zeigt eine Seitenansicht einer längeren Stütze des Montagesystems mit einem nach unten offenen Kabeldurchgangsraum.

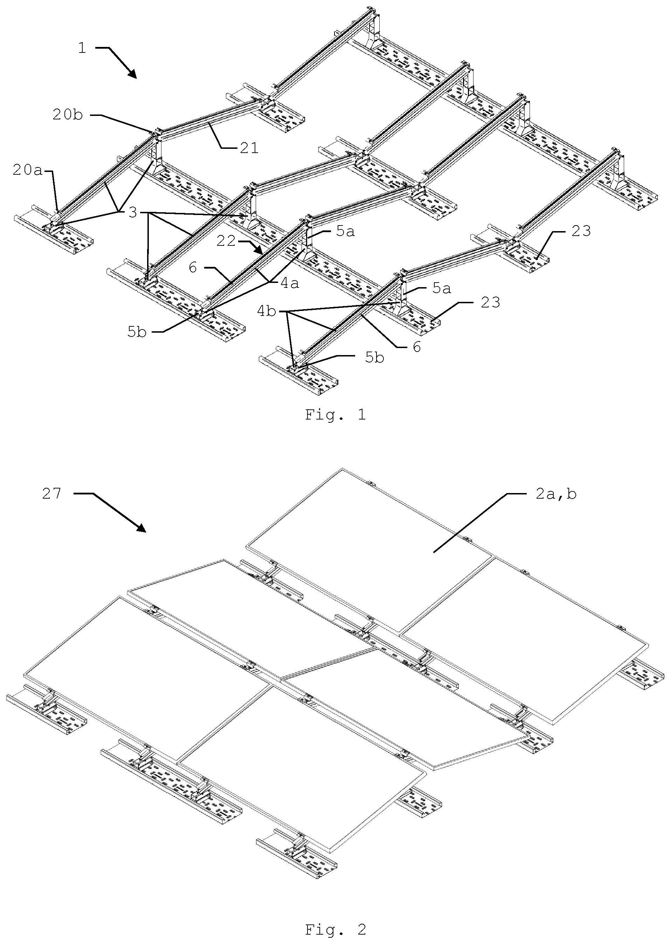

**Figur** 1 zeigt ein Montagesystem 1 zur Montage von Photovoltaikmodulen 2a (siehe Figur 2) oder Sonnenkollektoren 2b (siehe Figur 2) auf Flachdächern oder Freiflächen.

Das Montagesystem 1 weist sechs Montageeinheiten 3 mit je zwei Auflagevorrichtungen 4a, 4b auf, wobei die zwei Auflagevorrichtungen 4a, 4b je zwei Stützen 5a, 5b und je einen Träger 6 aufweisen.

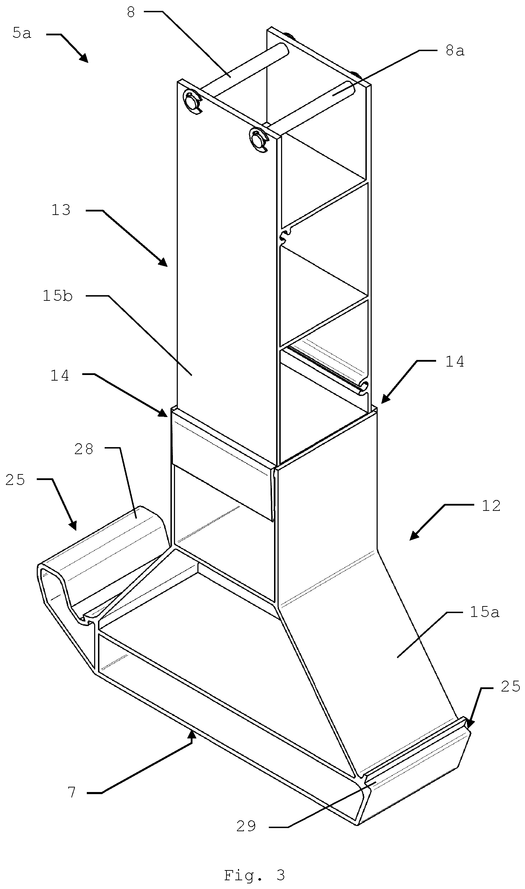

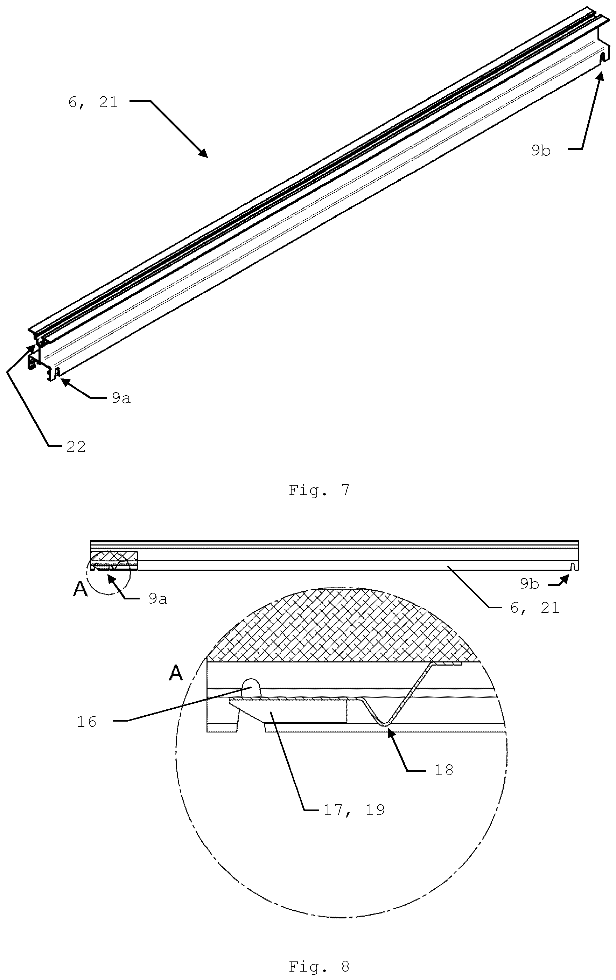

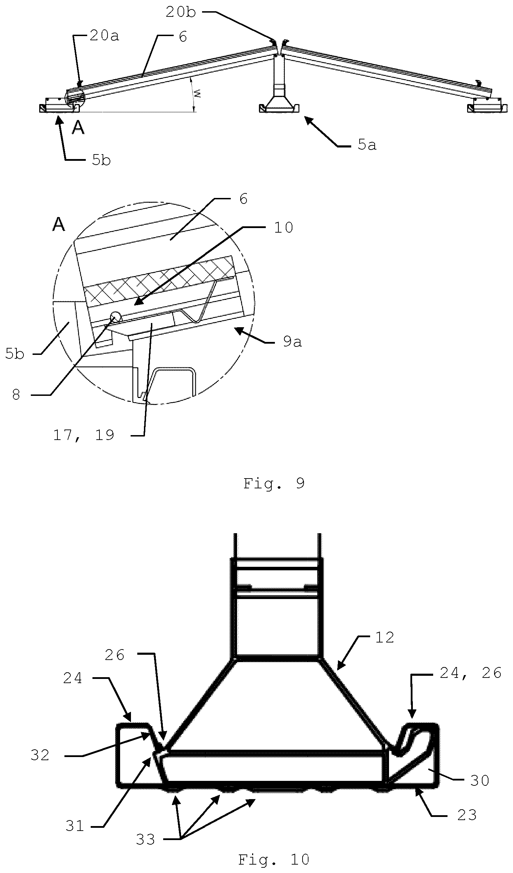

Bei jeder Auflagevorrichtung 4a, 4b weisen die Stützen 5a, 5b je eine Bodenfläche 7 (siehe Figuren 3, 4, 5, 6, 11) und einen von der Bodenfläche 7 beabstandeten oberen Endbereich mit einem Stützenverbindungselement 8 (siehe Figuren 3, 4, 5, 6, 9, 11) auf. Die stirnseitigen Endbereiche der Träger 6 umfassen je ein Trägerverbindungselement 9a, 9b (siehe Figuren 7, 8, 9). Die Träger 6 sind durch ein Verbinden der Trägerverbindungselemente 9a, 9b mit den Stützenverbindungselementen 8, mit den Stützen 5a, 5b verbindbar. Die Stützenverbindungselemente 8 und die Trägerverbindungselemente 9a, 9b sind Verbindungselemente von Schnappverbindungen 10 (siehe Figur 9).

Bei der Montage ist jeder Träger 6 über die Schnappverbindungen 10 mit den oberen Endbereichen der auf den Bodenflächen 7 aufgestellten Stützen 5a, 5b verbindbar und sind Photovoltaikmodule 2a oder Sonnenkollektoren 2b auf die mit den Stützen 5a, 5b verbundenen Träger 6 der Auflagevorrichtungen 4a, 4b auflegbar und an diesen Trägern 6 befestigbar.

Zum Montieren einer in Figur 1 gezeigten Auflagevorrichtung 4a, 4b sind in einem ersten Montageschritt die zwei Stützen 5a, 5b mit den Bodenschienen 23 über die Bodenschnappverbindungen 26 (siehe Figur 10) formschlüssig zu verbinden, sodass ihre oberen Endbereiche mit den Stützenverbindungselementen 8 frei zugänglich sind. Die zwei Stützen 5a, 5b sind so ausgestaltet, dass wenn sie auf ihre Bodenfläche 7 aufgestellt sind, vertikal auf dem Flachdach oder der Freifläche stehen.

In einem weiteren Montageschritt ist der Träger 6 mit den Stützen 5a, 5b zu verbinden.

Dazu kann beispielsweise ein Trägerverbindungselement 9a, 9b des Trägers 6 mit einem Stützenverbindungselement 8 einer der zwei Stützen 5a, 5b zusammengedrückt werden, bis das Trägerverbindungselement 9a, 9b und das Stützenverbindungselement 8 ineinander einschnappen und so der Träger 6 mit der Stütze 5a, 5b formschlüssig verbunden ist. Das andere Trägerverbindungselement 9a, 9b ist dann mit dem Stützenverbindungselement 8 der anderen Stütze 5a, 5b zusammenzudrücken, bis das andere Trägerverbindungselement 9a, 9b und das Stützenverbindungselement 8 der anderen Stütze 5a, 5b ineinander einschnappen und so der Träger 6 auch mit der anderen Stütze 5a, 5b formschlüssig verbunden ist.

Da die zwei Stützen 5a, 5b je vertikal auf dem Flachdach oder der Freifläche stehen ist das Zusammendrücken der Trägerverbindungselemente 9a, 9b und der Stützenverbindungselemente 8 durch die Schwerkraft unterstützt und kann somit erleichtert erfolgen.

Jeder Träger 6 verbindet zwei Stützen 5a, 5b und wird von diesen so gestützt, dass zwischen den zwei Stützen 5a, 5b ein Photovoltaikmodul 2a oder ein Sonnenkollektor 2b auf den Träger 6 auflegbar ist und dann vom Träger 6 gestützt wird.

**Figur 2** zeigt eine Photovoltaikmodul- oder Sonnenkollektoranordnung 27 mit einem Montagesystem 1, wie es beispielsweise in Figur 1 gezeigt ist. Die Photovoltaikmodule 2a oder die Sonnenkollektoren 2b sind rechteckig und haben zwei Längsseiten und zwei Schmalseiten.

Die Träger 6 des Montagesystems 1 sind parallel zueinander ausgerichtet. Das Photovoltaikmodul 2a oder der Sonnenkollektor 2b ist mit seiner Längsseite quer zu den Trägern 6 auf die Träger 6 aufgelegt. Dadurch wird erreicht, dass das Photovoltaikmodul 2a oder der Sonnenkollektor 2b zwischen seinen Schmalseiten gestützt und somit auch zwischen seinen Schmalseiten belastbar ist.

Bei jeder Auflagevorrichtung 4a, 4b ist eine der zwei Stützen 5a, 5b die längere Stütze 5a und die andere die kürzere Stütze 5b. Die längeren Stützen 5a sind gleichlang und die kürzeren Stützen 5b sind gleichlang.

Die Träger 6 sind zum Flachdach oder zur Freifläche hin geneigt ausgerichtet. Dadurch sind die Photovoltaikmodule 2a oder die Sonnenkollektoren 2b in geneigter Ausrichtung montiert. Die längeren und kürzeren Stützen 5a, 5b haben Längen, sodass die Träger 6 mit einem Winkel W zur Horizontalen von 10° ≤ W ≤ 20° ausgerichtet sind (siehe Figur 9). Dadurch sind die Photovoltaikmodule 2a oder Sonnenkollektoren 2b unter einem Winkel W zur Horizontalen von 10° ≤ W ≤ 20° am Montagesystem 1 montiert und auf die Sonne ausgerichtet.

**Figur 3** zeigt eine längere Stütze 5a, die ein weiteres Stützenverbindungselement 8a im von der Bodenfläche 7 beabstandeten oberen Endbereich aufweist. Das Stützenverbindungselement 8 und das weitere Stützenverbindungselement 8a sind in einer zur Bodenfläche 7 parallelen Ebene nebeneinander angeordnet.

Das weitere Stützenverbindungselement 8a bei der längeren Stütze 5a ermöglicht das Verbinden von zwei Trägern 6 mit der längeren Stütze 5a, sodass die längere Stütze 5a Teil von zwei benachbarten Montageeinheiten 3 ist (siehe Figur 1).

Die Stütze 5a umfasst einen Fuss 12 mit der Bodenfläche 7 als Teil davon und ein am Fuss 12 anschliessendes Stützenelement 13.

Der Fuss 12 ist so ausgestaltet, dass er den Querschnitt des Stützenelements 13 mindestens teilweise so überragt, dass die Stütze 5a selbststehend auf ihre Bodenfläche 7 aufstellbar ist. Dadurch ist die Stütze 5a einzeln stabil auf einem Flachdach oder einer Freifläche aufstellbar.

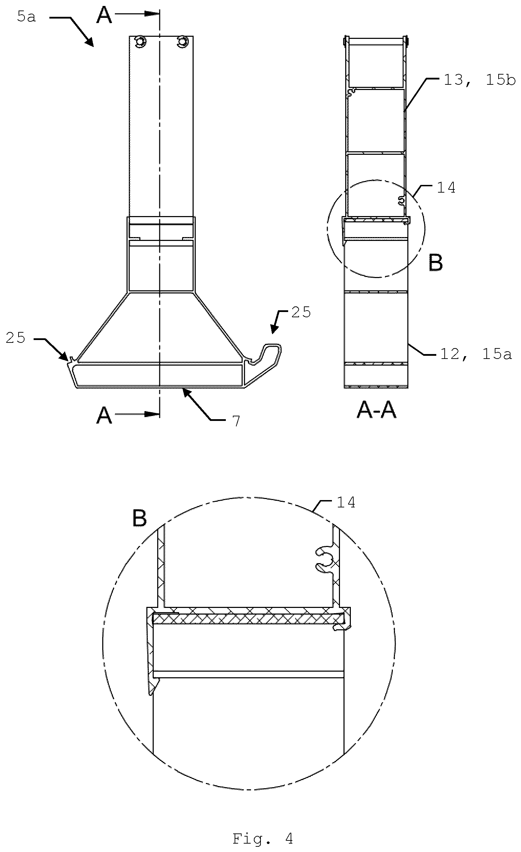

Der Fuss 12 und das Stützenelement 13 sind über die Stützenschnappverbindung 14 (siehe auch Figur 4) miteinander verbindbar und voneinander lösbar.

Der Fuss 12 ist ein Abschnitt eines ersten Strangpressprofils 15a. Das Stützenelement 13 ist ein Abschnitt eines zweiten Strangpressprofils 15b. Die Profilquerschnittsebene des Fusses 12 erstreckt sich orthogonal zur Profilquerschnittsebene des Stützenelements 13.

Dadurch sind die rohrartigen Strangpressprofilbereiche des Fusses 12 orthogonal zu den rohrartigen Strangpressprofilbereichen des Stützenelements 13 ausgerichtet.

Die Stützenverbindungselemente 8, 8a sind stabförmig ausgebildet und weisen einen runden Querschnitt auf.

Die Stützenverbindungselemente 8, 8a und die Trägerverbindungselemente 9a, 9b (siehe Figuren 7 und 8) sind so ausgebildet, dass wenn der Träger 6 über die Schnappverbindung 10 mit dem oberen Endbereich der längeren Stütze 5a verbunden ist, der Träger 6 um eine Schwenkachse, die im Bereich der Verbindungselemente angeordnet ist, um mindestens 90° schwenkbar ist.

Dabei umfasst das Stützenverbindungselement 8 bzw. das weitere Stützenverbindungselement 8a die Schwenkachse und der Träger 6 ist um das Stützenverbindungselement 8 bzw. um das weitere Stützenverbindungselement 8a schwenkbar.

Die längere Stütze weist einen u-profilförmigen Abschnitt auf. Der u-profilförmige Abschnitt weist zwei beabstandete und im Wesentlichen parallel zueinander ausgerichtete Schenkel auf, wobei das Stützenverbindungselement 8 und das weitere Stützenverbindungselement 8a sich je vom einen der zwei Schenkel zum anderen der zwei Schenkel durch den dazwischenliegenden Hohlraum hindurch erstrecken und an den Schenkeln befestigt sind.

Das Stützenverbindungselement 8 und das weitere Stützenverbindungselement 8a sind so am rohrartigen u-profilförmigen Abschnitt angeordnet und der rohrartige u-profilförmige Abschnitt ist so geformt, dass wenn Träger 6 über die Schnappverbindungen 10 mit dem oberen Endbereich der längeren Stütze verbunden sind, Teile der Träger 6 in den Hohlraum ragen oder in den Hohlraum schwenkbar sind.

Das Stützenbodenverbindungselement 25 umfasst einen Haken 28 und einen Vorsprung 29. Das Bodenschienenverbindungselement 24 der Bodenschiene 23 umfasst eine Hakenaufnahme 30, einen Aufnahmeraum 31 für den Vorsprung 29 und ein beim Aufnahmeraum 31 angeordnetes elastisch auslenkbares Schnappelement 32 (siehe Figur 10). Der Haken 28 und der Vorsprung 29 sind einander gegenüberliegend an der längeren Stütze 5a angeordnet. Die Hakenaufnahme 30 und der Aufnahmeraum 31 für den Vorsprung 29 sind einander gegenüberliegend an der Bodenschiene 23 angeordnet (siehe Figur 10). Der Haken 28, der Vorsprung 29, die Hakenaufnahme 30, der Aufnahmeraum 31 und das Schnappelement 32 sind so geformt und aneinander angepasst, dass zur Verbindung der längeren Stütze 5a mit der Bodenschiene 23, der Haken 28 in der Hakenaufnahme 30 einhängbar ist, und mit eingehängtem Haken 28 der Vorsprung 29 gegen das Schnappelement 32 so drückbar ist, dass dieses elastisch auslenkt und wenn der Vorsprung 29 im Aufnahmeraum 31 zu liegen kommt elastisch zurückschwenkt und hinter dem Vorsprung 29 einrastet. Die längere Stütze 5a ist dadurch in der Bodenschiene 23 festgeklemmt und fest mit der Bodenschiene 23 verbunden. Die Bodenschiene 23 umfasst vorstehende Kanten 33, die so an der Bodenschiene 23 ausgebildet sind, dass sie in die Oberfläche, auf der die Bodenschiene 23 aufgelegt ist, gedrückt werden.

**Figur 4** zeigt eine Seitenansicht und eine Schnittdarstellung der längeren Stütze 5a der Figur 3 und unten eine vergrösserte Ansicht der Stützenschnappverbindung 14.

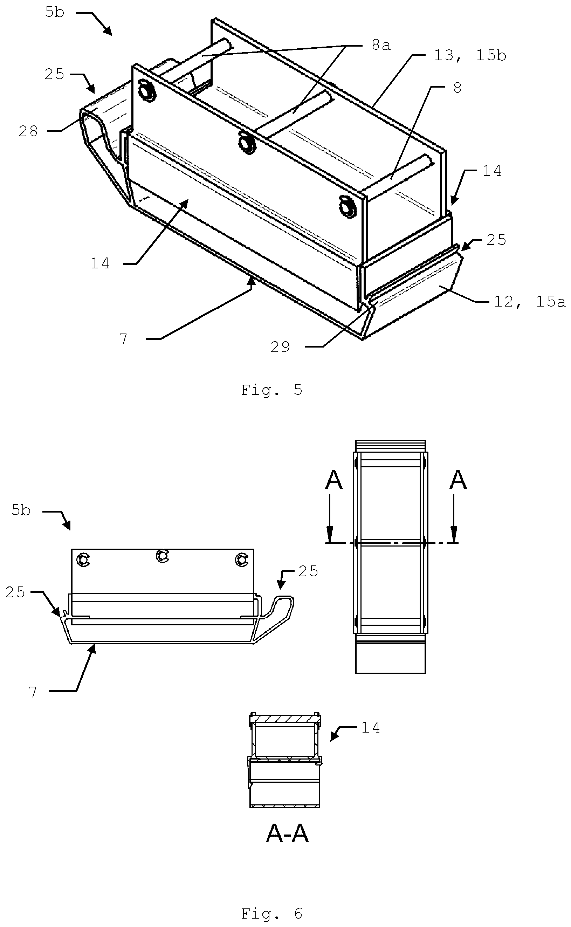

**Figur 5** zeigt eine kürzere Stütze 5b mit einem Stützenverbindungselement 8 und zwei weiteren Stützenverbindungselementen 8a im von der Bodenfläche 7 beabstandeten oberen Endbereich.

Die weiteren Stützenverbindungselemente 8a ermöglichen das Verbinden von zwei Trägern 6 mit der kürzeren Stütze 5b, sodass die kürzere Stütze 5b Teil von zwei benachbarten Montageeinheiten 3 ist (siehe Figur 1). Die weiteren Stützenverbindungselemente 8a sind in Längsrichtung des Fusses nebeneinander angeordnet. Eines der weiteren Stützenverbindungselemente 8a ist zwischen dem anderen weiteren Stützenverbindungselement 8a und dem Stützenverbindungselement 8 angeordnet. Bildet diese kürzere Stütze 5b einen Abschluss einer Photovoltaikmodul- oder Sonnenkollektoranordnung 27 (siehe Figur 2) kann der Träger 6 mit dem weiteren Stützenverbindungselement 8a das zwischen dem anderen weiteren Stützenverbindungselement 8a und dem Stützenverbindungselement 8 angeordnet ist formschlüssig verbunden werden, um so auftretende Lasten optimal abzuleiten.

Für die Beschreibung der Merkmale, welche bereits in den Figuren 3 und 4 im Zusammenhang mit der längeren Stützte 5a gezeigt sind, wird auf die Figurenbeschreibung zu den Figuren 3 und 4 verwiesen. Diese gilt in analoger Weise für die Figuren 5 und 6.

**Figur 7** zeigt einen Träger 6 mit Trägerverbindungselementen 9a, 9b. Der Träger 6 ist ein Strangpressprofil 21 mit einer parallel zur Längsachse des Strangpressprofils 21 verlaufenden Nut 22 zur Aufnahme eines Nutsteins, sodass das Photovoltaikmodul 2a oder der Sonnenkollektor 2b mit zwei Befestigungselementen 20a, 20b, die je mittels eines Nutsteins am Träger 6 festklemmbar sind, am Träger 6 befestigbar ist.

**Figur 8** oben zeigt eine Seitenansicht des Trägers 6 aus Figur 7. Figur 8 unten zeigt in vergrösserter Ansicht ein Trägerverbindungselement 9a, welches einen Aufnahmeraum 16 zur Aufnahme von stabförmig ausgebildeten Stützenverbindungselementen 8, 8a und eine aus einer Ruhestellung elastisch auslenkbare Sperre 17, die in Ruhestellung einen Durchgang zum Aufnahmeraum 16 für stabförmig ausgebildete Stützenverbindungselemente 8, 8a sperrt, umfasst. Beim Drücken der Sperre 17 gegen das stabförmig ausgebildete Stützenverbindungselement 8, 8a, wird die Sperre 17 elastisch ausgelenkt und dadurch der Durchgang für das stabförmig ausgebildete Stützenverbindungselement 8, 8a freigegeben. Nach Aufnahme des stabförmig ausgebildeten Stützenverbindungselements 8, 8a im Aufnahmeraum 16 wird die Sperre 17 in die Ruhestellung zurückgelenkt und sperrt den Durchgang für das stabförmig ausgebildete Stützenverbindungselement 8, 8a.

Die Sperre 17 und der Aufnahmeraum 16 sind so ausgestaltet, dass, wenn der Träger 6 über die Schnappverbindung 10 (siehe Figur 9) mit dem oberen Endbereich der Stütze 5a, 5b verbunden ist, das Stützenverbindungselement 8, 8a vom Trägerverbindungselement 9a allseitig umgriffen ist.

Die Sperre 17 umfasst ein Federelement 18, das als Blattfederelement ausgebildet ist, und einen Schieber 19. Der Schieber ist durch das Federelement 18 elastisch auslenkbar in der Ruhestellung gehalten.

**Figur 9** zeigt eine Seitenansicht eines Montagesystems 1. Der Träger 6 ist in einem Winkel W von 10° ≤ W ≤ 20° zur Horizontalen ausgerichtet montiert. Das Montagesystem 1 umfasst als Befestigungselemente 20a, 20b Klemmen, die mittels Nutsteinen am Träger 6 festklemmbar sind. Figur 9 unten zeigt eine vergrösserte Ansicht der Schnappverbindung 10 über welche der Träger 6 mit der kürzeren Stütze 5b formschlüssig verbunden ist. Dabei wird das Stützenverbindungselement 8 von der Sperre 17, welche als Schieber 19 ausgebildet ist, formschlüssig umgriffen.

**Figur 10** zeigt eine Bodenschiene 23 mit einem Bodenschienenverbindungselement 24 und einer Bodenschnappverbindung 26. Das gezeigte Bodenschienenverbindungselement 24 umfasst die Hakenaufnahme 30, den Aufnahmeraum 31 für den Vorsprung 29 (siehe Figur 3) und das Schnappelement 32.

Figur 10 zeigt einen Fuss 12 einer längeren Stütze 5a (siehe Figur 3) der über die Bodenschnappverbindung 26 mit der Bodenschiene 23 formschlüssig verbunden ist.

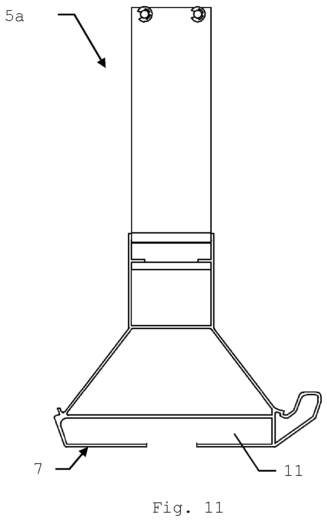

**Figur 11** zeigt eine längere Stütze 5a mit einem nach unten offenen Kabeldurchgangsraum 11 im Bereich der Bodenfläche 7. Eine solche längere Stütze 6 ist so auf Kabel stellbar, dass die Kabel in den Kabeldurchgangsraum 11 gelangen.

## Patentansprüche

1. Montagesystem (1) zur Montage von Photovoltaikmodulen (2a) oder Sonnenkollektoren (2b) auf Flachdächern oder Freiflächen, aufweisend
mindestens eine Montageeinheit (3) mit zwei Auflagevorrichtungen (4a, 4b), die je zwei Stützen (5a, 5b) und je einen Träger (6) aufweisen,
wobei bei jeder der zwei Auflagevorrichtungen (4a, 4b)
die Stützen (5a, 5b) je eine Bodenfläche (7) aufweisen,
die Stützen (5a, 5b) je einen von der Bodenfläche (7) beabstandeten oberen Endbereich mit einem Stützenverbindungselement (8) aufweisen,
die stirnseitigen Endbereiche des Trägers (6) je ein Trägerverbindungselement (9a, 9b) aufweisen,
der Träger (6), durch ein Verbinden der Trägerverbindungselemente (9a, 9b) mit den Stützenverbindungselementen (8), mit den Stützen (5a, 5b) verbindbar ist, und
die Stützenverbindungselemente (8) und die Trägerverbindungselemente (9a, 9b) Verbindungselemente von Schnappverbindungen (10) sind,
sodass bei der Montage
bei jeder der zwei Auflagevorrichtungen (4a, 4b) der Träger (6) über die Schnappverbindungen (10) mit den oberen Endbereichen der auf den Bodenflächen (7) aufgestellten Stützen (5a, 5b) verbindbar ist, und
ein Photovoltaikmodul (2a) oder ein Sonnenkollektor (2b) auf die mit den Stützen (5a, 5b) verbundenen Träger (6) der zwei Auflagevorrichtungen (4a, 4b) auflegbar und an diesen Trägern (6) befestigbar ist.

2. Montagesystem (1) nach Anspruch 1, wobei bei jeder der zwei Auflagevorrichtungen (4a, 4b) eine der zwei Stützen (5a, 5b) die längere Stütze (5a) ist und die andere die kürzere Stütze (5b) ist und insbesondere die längeren Stützen (5a) gleichlang und die kürzeren Stützen (5b) gleichlang sind.

3. Montagesystem (1) nach Anspruch 2, wobei
die längeren Stützen (5a) je ein weiteres Stützenverbindungselement (8a) im von der Bodenfläche (7) beabstandeten oberen Endbereich aufweisen, und
die kürzeren Stützen (5b) je ein weiteres Stützenverbindungselement (8a) oder zwei weitere Stützenverbindungselemente (8a) im von der Bodenfläche (7) beabstandeten oberen Endbereich aufweisen.

4. Montagesystem (1) nach einem der Ansprüche 2 bis 3, wobei die längeren Stützen (5a) je
im Bereich der Bodenfläche (7) einen nach unten offenen Kabeldurchgangsraum (11) aufweisen,
sodass die längeren Stützen (5a) so auf Kabel stellbar sind, dass die Kabel in den Kabeldurchgangsraum (11) gelangen.

5. Montagesystem (1) nach einem der Ansprüche 1 bis 4, wobei die Stützen (5a, 5b) je einen Fuss (12) mit der Bodenfläche (7) als Teil davon und je ein am Fuss (12) anschliessendes Stützenelement (13) aufweisen.

6. Montagesystem (1) nach Anspruch 5, wobei bei jeder Stütze (5a, 5b) der Fuss (12) und das Stützenelement (13) über eine Stützenschnappverbindung (14) miteinander verbindbar und voneinander lösbar sind.

7. Montagesystem (1) nach einem der Ansprüche 5 bis 6, wobei bei jeder Stütze (5a, 5b) der Fuss (12) ein Abschnitt eines ersten Strangpressprofils (15a) ist, das Stützenelement (13) ein Abschnitt eines zweiten Strangpressprofils (15b) ist, und sich die Profilquerschnittsebene des Fusses (12) orthogonal zur Profilquerschnittsebene des Stützenelements (13) erstreckt.

8. Montagesystem (1) nach einem der Ansprüche 1 bis 7, wobei
die Stützenverbindungselemente (8) je stabförmig ausgebildet sind, und
die Trägerverbindungselemente (9a, 9b) je
einen Aufnahmeraum (16) zur Aufnahme eines stabförmig ausgebildeten Stützenverbindungselements (8), und
eine aus einer Ruhestellung elastisch auslenkbare Sperre (17), die in Ruhestellung einen Durchgang zum Aufnahmeraum (16) für das stabförmig ausgebildete Stützenverbindungselement (8) sperrt,
aufweisen,
sodass beim Drücken der Sperre (17) gegen das stabförmig ausgebildete Stützenverbindungselement (8), die Sperre (17) elastisch auslenkt und dadurch den Durchgang für das stabförmig ausgebildete Stützenverbindungselement (8) freigibt und diesen nach Aufnahme des stabförmig ausgebildeten Stützenverbindungselements (8) im Aufnahmeraum (16) für das stabförmig ausgebildete Stützenverbindungselement (8) sperrt.

9. Montagesystem (1) nach Anspruch 8, wobei die Sperre (17) ein Federelement (18), insbesondere ein Blattfederelement oder Spiralfederelement, und einen Schieber (19) umfasst, und der Schieber (19) durch das Federelement (18) elastisch auslenkbar in der Ruhestellung gehalten ist, insbesondere wobei der Schieber (19) und das Blattfederelement einstückig ausgebildet sind.

10. Montagesystem (1) nach einem der Ansprüche 1 bis 9, wobei jede der zwei Auflagevorrichtungen (4a, 4b) zwei Befestigungselemente (20a, 20b) aufweist und jeder Träger (6) der zwei Auflagevorrichtungen (4a, 4b) je ein Strangpressprofil (21) mit einer parallel zur Längsachse des Strangpressprofils (21) verlaufenden Nut (22) zur Aufnahme eines Nutsteins ist, sodass das Photovoltaikmodul (2a) oder der Sonnenkollektor (2b) mit den zwei Befestigungselementen (20a, 20b), die je mittels eines Nutsteins am jeweiligen Träger (6) festklemmbar sind, am jeweiligen Träger (6) befestigbar ist.

11. Montagesystem (1) nach einem der Ansprüche 1 bis 10, wobei
das Montagesystem (1) mindestens eine Bodenschiene (23) aufweist,
die mindestens eine Bodenschiene (23) ein Bodenschienenverbindungselement (24) aufweist,
bei jeder der zwei Auflagevorrichtungen (4a, 4b)
die Stützen (5a, 5b) je einen unteren Endbereich, der die Bodenfläche (7) umfasst, aufweisen, und
mindestens eine Stütze (5a) ein Stützenbodenverbindungselement (25) im unteren Endbereich aufweist, und
die Stützenbodenverbindungselemente (25) und das Bodenschienenverbindungselement (24) Verbindungselemente von Bodenschnappverbindungen (26) sind,
sodass bei der Montage der mindestens einen Montageeinheit (3) bei jeder der zwei Auflagevorrichtungen (4a, 4b)
die mindestens eine Stütze (5a) über eine Bodenschnappverbindung (26) mit der mindestens einen Bodenschiene (23) verbindbar ist, und
der Träger (6), der mit der mindestens einen Stütze (5a), die mit der mindestens einen Bodenschiene (23) verbunden ist, über eine der Schnappverbindungen (10) verbunden ist, quer zur mindestens einen Bodenschiene (23) verläuft.

12. Photovoltaikmodul- oder Sonnenkollektoranordnung (27) mit einem Montagesystem (1) nach einem der Ansprüche 1 bis 11, mit Photovoltaikmodulen (2a) oder Sonnenkollektoren (2b), die jeweils an den zwei Trägern (6) jeder Montageeinheit (3) befestigt sind.

13. Photovoltaikmodul- oder Sonnenkollektoranordnung (27) nach Anspruch 12 mit einem Montagesystem (1) nach Anspruch 10, wobei die Befestigungselemente (20a, 20b) Klemmen sind und die Photovoltaikmodule (2a) oder Sonnenkollektoren (2b) jeweils auf den Trägern (6) einer Montageeinheit (3), insbesondere mit ihrer Längsrichtung quer zu den Trägerlängsrichtungen, aufliegen und an jedem Träger (6) mit zwei Klemmen, insbesondere an ihren Längsseiten, festgeklemmt sind.

14. Verwendung eines Montagesystems (1) nach einem der Ansprüche 1 bis 11 zur Montage einer Photovoltaikmodul- oder Sonnenkollektoranordnung (27).

15. Montageverfahren zur Montage eines Photovoltaikmoduls (2a) oder eines Sonnenkollektors (2b) auf einem Flachdach oder auf einer Freifläche, mit den Schritten
Bereitstellen eines Montagesystems (1) nach einem der Ansprüche 1 bis 11,
für jede der zwei Auflagevorrichtungen (4a, 4b)
Aufstellen der Stützen (5a, 5b) auf dem Flachdach oder der Freifläche, und
Verbinden des Trägers (6) über die Schnappverbindungen (10) mit den oberen Endbereichen der Stützen (5a, 5b),
Auflegen eines Photovoltaikmoduls (2a) oder eines Sonnenkollektors (2b) auf die mit den Stützen (5a, 5b) verbundenen Träger (6) der zwei Auflagevorrichtungen (4a, 4b), und
Befestigen des Photovoltaikmoduls (2a) oder Sonnenkollektors (2b) an den Trägern (6).
